# EUROPEAN PATENT SPECIFICATION

(11) **EP 1 707 476 B1**
(45) Date of publication and mention of the grant of the patent: **05.03.2008**
(21) Application number: 06111236.3
(22) Date of filing: 16.03.2006
(51) Int. Cl.: B62D 25/08, B60H 1/00

(54) **Heat exchanger support structure and heat exchanger supporting method**
Wärmetauscher-Haltevorrichtung und -Verfahren
Support et procédé de montage d'exchangeur de chaleur

(30) Priority: 28.03.2005 JP 2005085779
(43) Date of publication of application: 04.10.2006
(73) Proprietor: Calsonic Kansei Corporation, Tokyo 164-8602 (JP)
(72) Inventor: Matsuoka, Iwao, Nakano-ku Tokyo 164-8602 (JP); Uchiyama, Tatsuhiko, Nakano-ku Tokyo 164-8602 (JP); Hirai, Tadahiro, Nakano-ku Tokyo 164-8602 (JP)
(74) Representative: Intes, Didier Gérard André

(56) References cited:
- EP-A- 0 970 833
- EP-A- 1 319 579
- DE-A1-1102004 024 15

## Description

The present invention relates to a heat exchanger support structure, which is useful for a motor vehicle, which supports a first heat exchanger and a second heat exchanger, and also relates to a heat exchanger supporting method of the same support structure.

Such conventional heat exchanger support structures are disclosed in documents EP-1 319 579, EP-A-0 970 833 and DE-A-10/2004/024. Any of these documents describes a support structure in accordance with the preamble features of claim 1 and 10. In these support structures, both of a first heat exchanger and a second heat exchanger which is arranged in front of the first heat exchanger, are supported a radiator core support, which requires the radiator core support to be longer in a forward-rearward direction thereof. Indeed, since the heat exchangers are arranged in the forward-rearward direction, the radiator core support needs to extend over the first heat exchanger to the second heat exchanger. This increases its material costs.

In order to decrease material costs, additional brackets attachable to a radiator core support are used for removing an extending portion of the radiator core support. Such a conventional heat exchanger support structure is disclosed in Japanese Utility Model Laid-open No. (Jikkaihei) 4-35017. In this conventional support structure, a first heat exchanger and a second heat exchanger are supported by a radiator core support, to be secured to a vehicle body, and the second heat exchanger is fixed to the radiator core support by additional brackets.

Such conventional radiator core support structure has disadvantages in that its manufacturing process and cost increase in their assembly due to the additional brackets for fixing the second heat exchanger to the radiator core support or due to a complicated-shaped radiator core support.

It is, therefore, the object of the present invention to provide a heat exchanger support structure which can decrease manufacturing process and manufacturing cost, and to provide a heat exchanger support structure assembly method which can decrease manufacturing process and manufacturing cost.

According to a first aspect of the present invention there is provided a heat exchanger support structure comprising: a first heat exchanger; a second heat exchanger; and a radiator core support for supporting the first heat exchanger. The first heat exchanger has a lower supporting pin projecting downward from a lower portion of the first heat exchanger. The second heat exchanger is arranged in front of the first heat exchanger and has an upper portion and a lower portion. The upper portion is supported by the radiator core support and the lower portion is supported by the lower supporting pin of the first heat exchanger so that the lower supporting pin restricts a horizontal movement of the second heat exchanger and allows a vertical movement of the second heat changer.

This heat exchanger support structure can decrease manufacturing process and manufacturing cost.

According to a second aspect of the present invention there is provided a heat exchanger supporting method in which a radiator core support supports a first heat exchanger and a second heat exchanger, the method comprising: supporting an upper portion of the second heat exchanger by the radiator core support; and supporting a lower portion of the second heat exchanger by a lower supporting pin projecting downward from a lower portion of the first heat exchanger so that the lower supporting pin restricts a horizontal movement of the second heat exchanger and allows a vertical movement of the second heat exchanger.

This heat exchanger supporting method can decrease manufacturing process and manufacturing cost.

Preferably, the lower supporting pin is made of resin.

Therefore, it provides easy fracture of the supporting pin in a light bump, such as a bump where an impact applied to a bumper pushes and moves the second heat exchanger slightly rearward, thereby preventing the first heat exchanger from fatal damage.

Preferably, the lower supporting pin is coupled with a bracket of the second heat exchanger so that the second heat exchanger is supported by the first heat exchanger.

Therefore, manufacturing process and manufacturing cost can be decreased.

Preferably, the lower supporting pin supports the second heat exchanger through an elastic member.

Therefore, vibration applied to the second heat exchanger and attachment errors between the lower supporting pin and the second heat exchanger can be absorbed.

Preferably, the first heat exchanger is a radiator and the second heat exchanger is an oil cooler.

Therefore, they are suitable for a motor vehicle.

Preferably, the heat exchanger support structure further comprises a third heat exchanger, and the third heat exchanger is arranged in front of the radiator and supported by the radiator.

Therefore, three heat exchangers can be arranged in compact.

Preferably, the first heat exchanger is a radiator, the second heat exchanger is an oil cooler, and the third heat exchanger is a condenser.

Therefore, they are suitable for a motor vehicle.

Preferably, the first heat exchanger has a lower portion under the radiator core support when the first heat exchanger is attached to the radiator core support.

Therefore, it can provide easy installation of the second heat exchanger to the first heat exchanger.

Preferably, the upper portion of the second heat exchanger is supported by a welded bolt fixed on the radiator core support.

Therefore, it decreases manufacturing process and manufacturing cost.

The objects, features and advantages of the present invention will become apparent as the description proceeds when taken in conjunction with the accompanying drawings, in which:
FIG. 1 is an overall perspective view of a heat exchanger support structure of an embodiment according to the present invention;
FIG. 2 is a perspective view of a radiator core support structure used in the heat exchanger support structure shown in FIG. 1;
FIG. 3 is an enlarged perspective view of a radiator to be mounted on the radiator core support shown in FIGS. 1 and 2 and used in the heat exchanger support structure of the embodiment;
FIG. 4 is an enlarged perspective view of an condenser shown in FIG. 1 and used in the heat exchanger support structure of the embodiment ;
FIG. 5 is an enlarged perspective view of an oil cooler to be supported by the radiator shown in FIGS. 1 and 3 and used in the heat exchanger support structure of the embodiment;
FIG. 6 is an enlarged perspective view of a lower elastic member for supporting the heat exchanger on the radiator core support shown in FIG. 2;
FIG. 7 is an exploded perspective view of the radiator shown in FIGS. 1 and 3 and the oil cooler shown in FIGS. 1 and 5; and
FIG. 8 is an enlarged perspective view of a lower mount portion of the oil cooler shown in FIGS. 1, 5 and 7.

Throughout the following detailed description, similar reference characters and numbers refer to similar elements in all figures of the drawings, and their descriptions are omitted for eliminating duplication.

A heat exchanger support structure of an embodiment according to the present invention will be described with reference to the accompanying drawings. In this description, the terms "right", "left", "front" and "rear" are those identified with respect to a vehicle body, not to those in the drawings.

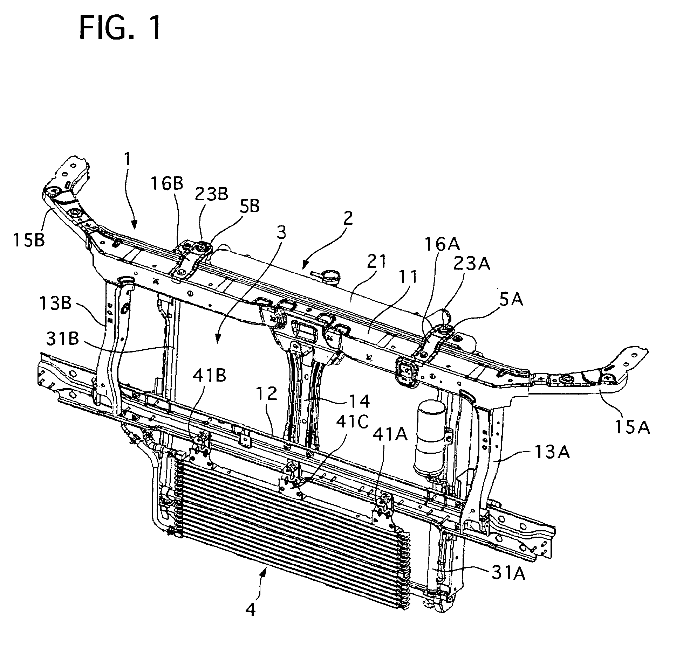

Referring to FIG. 1, there is shown the heat exchanger support structure of the embodiment, which is attached to a front portion of a not-shown vehicle body of a motor vehicle.

The heat exchanger support structure includes a radiator core support 1 fixed to the front portion of the vehicle body, a radiator 2 arranged at a rear side of the radiator core support 1, a condenser 3 arranged between the radiator core support 1 and the radiator 2, and an oil cooler 4 arranged at a front of the radiator 2 and the condenser 3 and under the radiator core support 1.

The radiator 2 acts as a first heat exchanger of the present invention, the oil cooler 4 acts as a second heat exchanger of the present invention, and the condenser 3 acts as a third heat exchanger of the present invention.

The radiator core support 1 comprises a radiator core upper member 11, a radiator core lower member 12, a radiator core left side member 13A, a radiator core right side member 13B, a hood lock stay 14, a radiator core upper left side member 15A, and a radiator core upper right side member 15B.

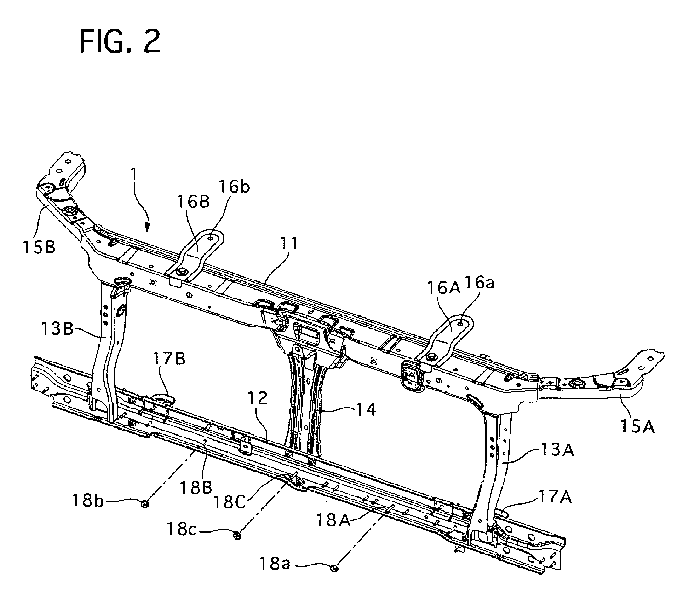

As shown in FIG. 2, the radiator core upper member 11 is arranged to extend in a lateral direction of the vehicle body, and the radiator core lower member 12 is arranged in parallel with and under the upper member 11, when the radiator core support is attached to the front portion of the vehicle body.

The radiator core left side member 13A connects left edge portions of the upper member 11 and the lower member 12 with each other, and the radiator core right side member 13B connects right edge portions of the upper member 11 and the lower member 12 with each other so that the members 11, 12, 13A and 13B form a rectangular frame.

The hood lock stay 14 connects center portions of the upper member 11 and the lower member 12.

The radiator core upper left side member 15A is connected with the left edge portion of the upper member 11, and the radiator core upper right side member 15B is connected with the right edge portion of the upper member 1. The upper left and right side members 15A and 15B are formed to project outward and rearward from the edge portions, respectively. These upper side members 15A and 15B are bolted to a front left portion and a front right portion of the vehicle body, respectively, to act as a front part of the vehicle body.

The upper member 11 is provided with an upper left bracket 16A formed with a left mounting hole 16a on its upper left portion between the hood lock stay 14 and the left side portion 13A. The upper member 11 is also provided with an upper right bracket 16B formed with a right mounting hole 16b on its upper right portion between the hood lock stay 14 and the right side portion 13B. The upper left and right brackets 16A and 16B are fixed to an upper surface of the upper member 11 to project rearward therefrom for supporting an upper portion of the radiator 2.

In the left and right mounting holes 16a and 16b, a left elastic member 5A with a hole and a right elastic member 5B with a hole are inserted, respectively.

The lower member 12 is provided with a lower left bracket 17A and a lower right bracket 17B at its rear side, both of which project rearward for supporting a lower portion of the radiator 2.

The lower member 12 has a left welded bolt 18A, a right welded bolt 18B and a center welded bolt 18C on its front side. The welded bolts 18A to 18C project forward for supporting an upper portion of the oil cooler 4 by using a left nut 18a, a right nut 18b and a center nut 18c.

The radiator core support 1, including members 11, 12, 13A, 13B, 14, 15A and 15B, the brackets 16A, 16B, 17A and 17B, and the bolts 18A to 18C, is entirely made of metal.

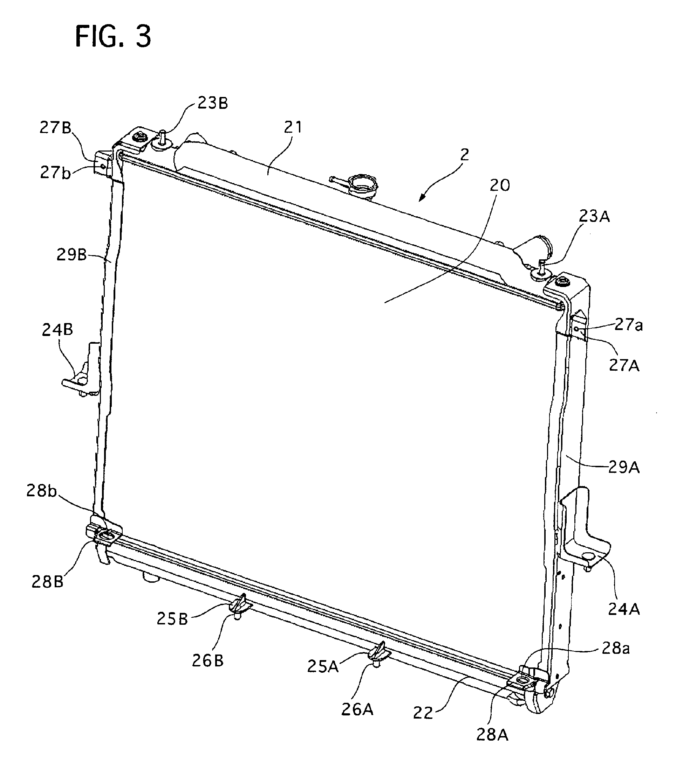

As shown in FIG. 3, the radiator 2 has an upper tank 21, a lower tank 22 in parallel with and under the upper tank 21, a radiator core 20 arranged between the upper and lower tank 21 and 22.

The upper tank 21 is formed with an upper left mounting pin 23A on its left upper surface and an upper right mounting pin 23B on its right upper surface, both of which project upward from the upper surfaces. The upper tank 21 has a pipe at its rear side. The pipe, the left and right mounting pins 23A and 23B and the upper tank 21 are integrally formed of resin.

The lower tank 22 is formed with a lower left bracket 25A and a lower right bracket 25B on its front portion, both of which project forward from the front portion. The left and right brackets 25A and 25B are formed with a lower left supporting pin 26A and a lower right supporting pin 26B on their bottom portions, respectively. The left and right supporting pins 26A and 26B project downward from bottom portions to support a lower portion of the oil cooler 4. The lower tank 22 has a pipe at its rear side. The pipe, the left and right brackets 25A and 25B, the left and right supporting pin 26A and 26B and the lower tank 22 are integrally formed of resin.

Incidentally, one of the pipes of the upper and lower tanks 21 and 22 is set to be an inlet pipe of the coolant, and the other of them is set to be an outlet pipe of the coolant. The pipes are connected with a not-shown engine through not-shown communicating pipes.

The upper and lower tanks 21 and 22 are connected at their both edge portions by a left side member 29A and a right side member 29B, respectively. The upper and lower tanks 21 and 22, the left and right side members 29A and 29B contain the radiator core 20.

The left and right side members 29A and 29B are provided with an upper left bracket 27A and an upper right bracket 27B on their upper sides, respectively. The upper left and right brackets 27A and 27B project outward in a lateral direction of the radiator 2 and in directions opposite to each other for supporting an upper portion of the condenser 3.

The left and right side members 29A and 29B are also provided with an intermediate left bracket 24A and an intermediate right bracket 24B on their intermediate sides. The intermediate left and right brackets 24A and 24B project outward in the lateral direction of the radiator 2 and in directions opposite to each other to be supported by the lower left and right brackets 17A and 17B of the lower member 12 of the radiator core support 1.

The left and right side members 29A and 29B are further provided with a lower left bracket 28A and a lower right bracket 28B on their lower sides, respectively. The lower left and right brackets 28A and 28B project forward for supporting a lower portion of the condenser 3 and are formed with a left hole 28a and a right hole 28b, respectively.

The radiator core 20 has a plurality of core tubes and fins, not shown, arranged to extend in the lateral direction of the radiator 2. The core tubes and fins are made of alminum and alternately disposed so that coolant can flow down along the core tubes, exchanging heat between the coolant and the air.

A height of the radiator 2 is set to be larger than that of the radiator core support 1, a distance between the upper member 11 and the lower member 12 thereof. Accordingly, the lower portion of the radiator 2 emerges under the radiator core support 1 when they are assembled with each other.

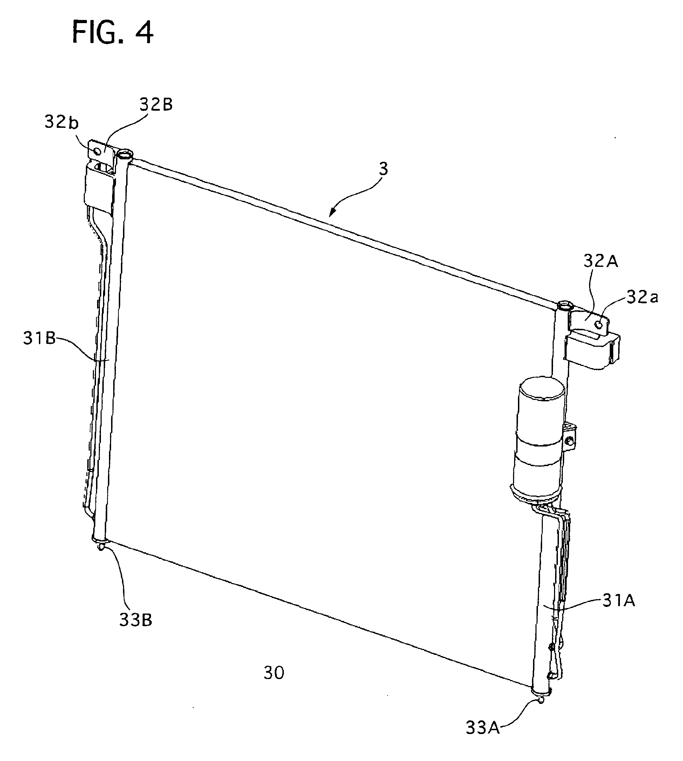

As shown in FIG. 4, there is shown the condenser 3. The condenser 3 includes a left tank 31A, a right tank 31B, and a condenser core 30 arranged between the tanks 31A and 31B. The condenser core 30 has a plurality of tubes and fins, both of which are made of alminum.

The left and right tanks 31 A and 31B are provided with a left bracket 32A and a right bracket 32B at their top portions, respectively. The left and right brackets 32A and 32B project outward in a lateral direction of the condenser 3 and in directions opposite to each other to be supported by the radiator 2.

The left and right tanks 31A and 31B are also provided with a left supported pin 33A and a right supported pin 33B on their bottom surfaces, respectively.
The left and right supported pins 33A and 33B project downward from the bottom surfaces to be insertable into the left and right holes 28a and 28b of the lower left and right brackets 28A and 28B of the radiator 2, respectively.

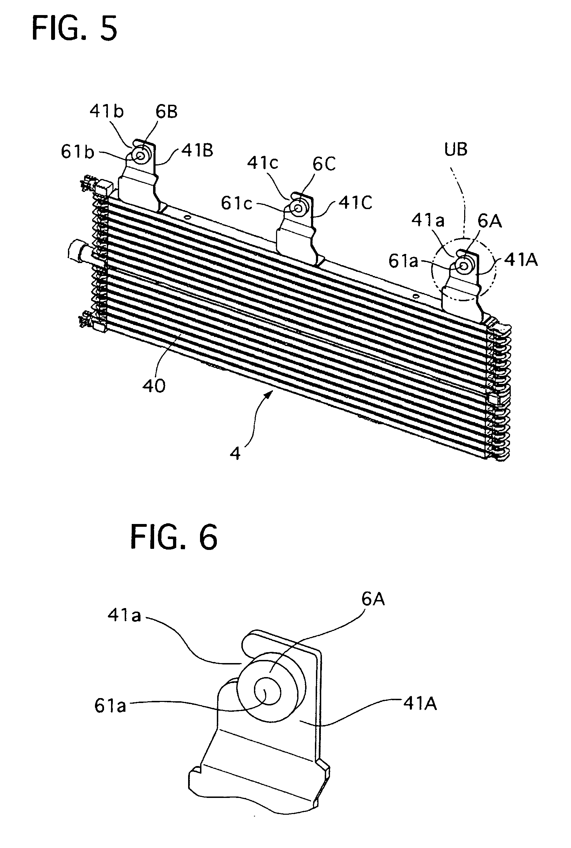

As shown in FIG. 5, there is the oil cooler 4. The oil cooler 4 has a cooler core 40 including a plurality of tubes and fins, both of which are made of aluminum. The oil cooler 4 is provided with an upper left bracket 41 A, an upper right bracket 41B, and an upper center bracket 41C on its upper portion. The upper left, right and center brackets 41 A, 41B and 41C project upward from the upper portion to be supported by the welded left, right and center bolts 18A, 18B and 18C of the radiator core support 1 and nuts 18a to 18c, respectively.

FIG. 6 shows an enlargement view of a part, enclosed by a circle UB in FIG. 5, of the upper left bracket 41 A. The upper left bracket 41 A is formed with a hole for fixing an elastic member 6A in it. The hole has a slit 41 a for the elastic member 6A to be easily inserted. The elastic member 6A has a hole 61 a for receiving the left welded bolt 18A.

The upper right and center brackets 6B and 6C are constructed similarly to the upper left bracket 6A to have holes with slits 41b and 41c, the holes being insertable by elastic members 6B and 6C with a hole for receiving the right welded bolt 18B and a hole for receiving the center welded bolt 18C, respectively.

The upper right and center brackets 41B and 41C are constructed similarly to the upper left bracket 41A to have holes with slits 4 1 b and 41 c, the holes being insertable by elastic members 6B with a hole for receiving the right welded bolt 18B and a hole for receiving the center welded bolt 18C of the radiator core support 1, respectively.

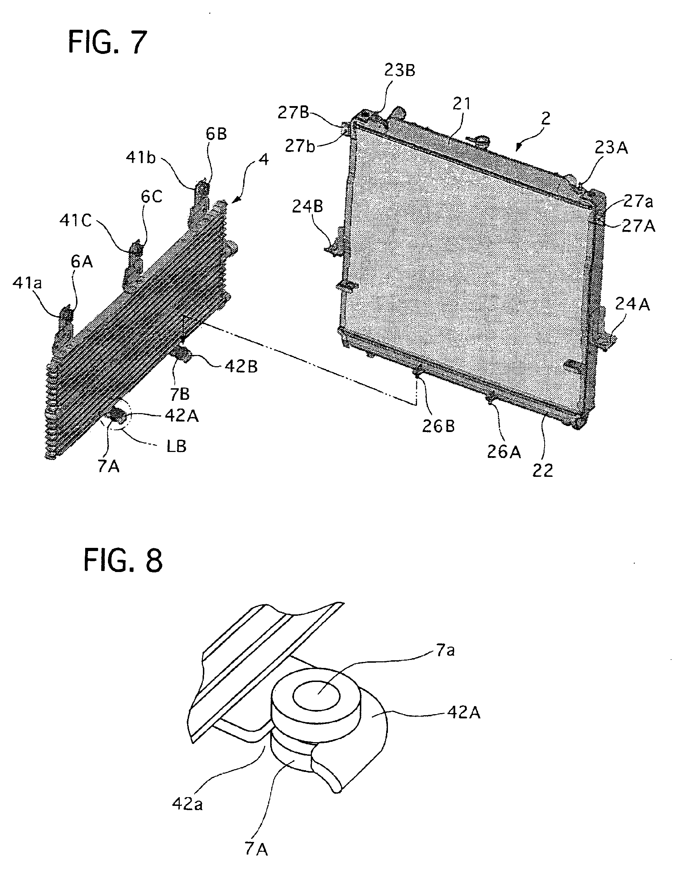

The lower portion of the oil cooler 4 is provided with a lower left bracket 42A and a lower right bracket 42B, which project rearward to be supported by the lower left and right supporting pins 26A and 26B as shown in FIG. 7.

FIG. 8 shows an enlargement view of a part, enclosed by a circle LB in FIG. 7, of the lower left bracket 42A. The lower left bracket 42A is formed with a hole for fixing an elastic member 7A in it. The hole has a slit 42a for the elastic member 7A to be easily inserted. The elastic member 7A has a hole 7a for receiving the lower left supporting pin 26A of the radiator 2.

The lower right bracket 42B is constructed similarly to the lower left bracket 42A to have a hole with a slit, the hole being insertable by an elastic member 7B with a hole for receiving the lower right supporting pin 26B of the radiator 2.

In this embodiment, the elastic members 5A, 5B, 6A to 6C, 7A and 7B are insulators made of synthetic rubber so as to absorb vibration and attachment errors.

Next, how to build the heat exchanger support structure of the embodiment will be described.

First, the radiator core support 1, the radiator 2, the condenser 3 and the oil cooler 4 are provided.

The condenser 3 is mounted on the radiator 2 by inserting the left and right supported pins 33A and 33B into the holes 28a and 28b of the lower left and right brackets 28A and 28B of the radiator 2 through not-shown elastic members, respectively. The upper left and right brackets 32A and 32B of the condenser 3 are arranged in front of the upper left and right brackets 27A and 27B of the radiator 2 so that the holes 32a and 32b of the condenser 3 can lap on the holes 27a and 27b of the radiator 2, respectively. The condenser 3 is fixed on the radiator 2 by not-shown nuts and not-shown bolts penetrating the holes 27a, 27b, 32a and 32b.

Next, the radiator 2 and condenser 3 are attached to the radiator core support 1, as shown in FIG. 1, by inserting the upper left and right mounting pins 23A and 23B of the radiator 2 into the holes 16a and 16b of the upper left and right brackets 16A and 16B of the radiator core support 1 through the elastic members 5A and 5B, respectively. In addition, the intermediate left and right brackets 24A and 24B of the radiator 2 are secured on the lower left and right brackets 17A and 17B of the radiator core support 1 by not-shown bolts and nuts through not-shown elastic members, respectively.

Then, the oil cooler 4 is attached to the radiator core support 1 and the radiator 2, as shown in FIG. 7, by inserting the lower left and right supporting pins 26A and 26B of the radiator 2 into the holes of the lower left and right brackets 42A and 42B of the oil cooler 4 through the elastic members 7A and 7B, respectively.

As shown in FIG. 1, the left, right and center welded bolts 18A , 18B and 18C of the radiator core support 1 are inserted into the holes of the upper left, right and center brackets 41 A, 41B and 41C of the oil cooler 4 through the elastic members 6A, 6B and 6C and fastened by nuts 18a, 18b and 18c, respectively.

Note that the oil cooler 4 is supported by the radiator 2 so that the lower left and right supporting pins 26A and 26B of the radiator 2 restrict a horizontal movement of the oil cooler 4, allowing a vertical movement thereof.

The radiator core support 1 with the radiator 2, the condenser 3 and the oil cooler 4 is attached to the front part of the vehicle body.

The heat exchanger structure of the embodiment has the following advantages.

The oil cooler 4 can be supported by the radiator core support 1 by bolts 18A to 18C and nuts 18a to 18c without additional brackets fixed to the radiator core support 1, decreasing the manufacturing process and manufacturing cost.

The lower portion of the oil cooler 4 is supported by the lower left and right supporting pins 26A and 26B of the radiator 2 so that the lower left and right supporting pins 26A and 26B restrict the horizontal movement of the oil cooler 4, allowing the vertical movement thereof. This can decrease stress applied to the lower tank 22 of the radiator 2. In addition, their assembly does not need a fastening process using bolts and nuts. Therefore, the manufacturing process and manufacturing cost can be reduced.

The lower left and right supporting pins 26A and 26B of the radiator 2 are made of resin, which provides easy fracture of the supporting pins 26A and 26B in a light bump, such as a bump where an impact applied to a bumper pushes and moves the oil cooler 4 slightly rearward. Therefore, it can prevent the lower tank 22 of the radiator 2 from fatal damage.

These supporting pins 26A and 26B and the lower tank 22 of the radiator 2 are integrally formed of resin, which can decrease the manufacturing process and manufacturing cost.

While there have been particularly shown and described with reference to preferred embodiments thereof, it will be understood that various modifications may be made therein.

For example, in this heat exchanger support structure of the embodiment, the lower left and right supporting pins 26A and 26B of the radiator 2 are made of resin, but they may be made of metal. In this case, they are preferably set to be long ones so that they can be easily deformable in a light bump.

The number of lower supporting pins of the radiator 2 is not limited.

In this embodiment, the first heat exchanger is the radiator 2 and the second heat exchanger is the oil cooler 4, but the heat exchangers may be not limited to these ones.

## Claims

1. A heat exchanger support structure comprising:
a first heat exchanger (2);
a second heat exchanger (4); and
a radiator core support (1) for supporting the first heat exchanger (2), wherein,
the first heat exchanger (2) has a lower supporting pin (26A; 26B) projecting downward from a lower portion (22) of the first heat exchanger (2), and wherein
the second heat exchanger (4) is arranged in front of the first heat exchanger (2) and has an upper portion and a lower portion, the upper portion being supported by the radiator core support (1)
**characterized in that** the lower portion of the second heat exchanger (4) is supported by the lower supporting pin (26A; 26B) of the first heat exchanger (2) so that the lower supporting pin (26A; 26B) restricts a horizontal movement of the second heat exchanger (4) and allows a vertical movement of the second heat changer (4).

2. The heat exchanger support structure of claim 1, wherein
the lower supporting pin (26A; 26B) is made of resin.

3. The heat exchanger support structure of claim 1 or claim 2, wherein
the lower supporting pin (26A; 26B) and a lower tank (22) of the first heat exchanger (2) are integrally formed of resin.

4. The heat exchanger support structure of any one of claims 1 to 3, wherein
the lower supporting pin (26A; 26B) is coupled with a bracket (42A, 42B, 42C) of the second heat exchanger (4) so that the second heat exchanger (4) is supported by the first heat exchanger (2).

5. The heat exchanger support structure of any one of claims 1 to 4, wherein
the first heat exchanger (2) is a radiator and the second heat exchanger (4) is an oil cooler.

6. The heat exchanger support structure of any one of claims 1 to 5, further comprising
a third heat exchanger (3), wherein
the third heat exchanger (3) is arranged in front of the first heat exchanger (2) and supported by the first heat exchanger (2).

7. The heat exchanger support structure of claim 6, wherein
the first heat exchanger (2) is a radiator, the second heat exchanger (4) is an oil cooler, and the third heat exchanger (3) is a condenser.

8. The heat exchanger support structure of any one of claims 1 to 7, wherein
the first heat exchanger (2) has a lower portion (22) under the radiator core support (1) when the first heat exchanger (2) is attached to the radiator core support (1).

9. The heat exchanger support structure of any one of claims 1 to 8, wherein the upper portion of the second heat exchanger (4) is supported by a welded bolt (18A; 18B; 18C) fixed on the radiator core support (1).

10. A heat exchanger supporting method
comprising the following steps :
supporting a first heat exchanger (2) by a radiator core support (1) ; and
- supporting an upper portion of a second heat exchanger (4) by the radiator core support (1) at a front side of the first heat exchanger (2),
**characterized in that** the method further comprises the step of:
- supporting a lower portion of the second heat exchanger (4) by a lower supporting pin (26A; 26B) projecting downward from a lower portion (22) of the first heat exchanger (2) so that the lower supporting pin (26A; 26B) restricts a horizontal movement of the second heat exchanger (4) and allows a vertical movement of the second heat exchanger (4).

## Patentansprüche

1. Tragkonstruktion für Wärmetauscher, umfassend:
einen ersten Wärmetauscher (2),
einen zweiten Wärmetauscher (4) und
einen Kühlerträger (1) zum Abstützen des ersten Wärmetauschers (2), wobei
der erste Wärmetauscher (2) einen unteren Abstützstift (26A; 26B) aufweist, der von einem unteren Abschnitt (22) des ersten Wärmetauschers (2) vorsteht, und wobei
der zweite Wärmetauscher (4) vor dem ersten Wärmetauscher (2) angeordnet ist und einen oberen Abschnitt und einen unteren Abschnitt aufweist, wobei der obere Abschnitt von dem Kühlerträger (1) abgestützt ist,
**dadurch gekennzeichnet, daß** der untere Abschnitt des zweiten Wärmetauschers (4) von dem unteren Abstützstift (26A; 26B) des ersten Wärmetauschers (2) abgestützt wird, so daß der untere Abstützstift (26A; 26B) eine horizontale Bewegung des zweiten Wärmetauschers (4) beschränkt und eine vertikale Bewegung des zweiten Wärmetauschers (4) zuläßt.

2. Tragkonstruktion für Wärmetauscher nach Anspruch 1, wobei der untere Abstützstift (26A; 26B) aus Harz besteht.

3. Tragkonstruktion für Wärmetauscher nach Anspruch 1 oder Anspruch 2, wobei der untere Abstützstift (26A; 26B) und ein unterer Behälter (22) des ersten Wärmetauschers (2) einstückig aus Harz ausgebildet sind.

4. Tragkonstruktion für Wärmetauscher nach einem der Ansprüche 1 bis 3, wobei der untere Abstützstift (26A; 26B) mit einer Halterung (42A, 42B, 42C) des zweiten Wärmetauschers (2) verbunden ist, so daß der zweite Wärmetauscher (4) von dem ersten Wärmetauscher (2) abgestützt wird.

5. Tragkonstruktion für Wärmetauscher nach einem der Ansprüche 1 bis 4, wobei der erste Wärmetauscher (2) ein Kühler ist und der zweite Wärmetauscher (4) ein Ölkühler ist.

6. Tragkonstruktion für Wärmetauscher nach einem der Ansprüche 1 bis 5, ferner umfassend einen dritten Wärmetauscher (3), wobei
der dritte Wärmetauscher (3) vor dem ersten Wärmetauscher (2) angeordnet ist und von dem ersten Wärmetauscher (2) abgestützt wird.

7. Tragkonstruktion für Wärmetauscher nach Anspruch 6, wobei der erste Wärmetauscher (2) ein Kühler ist, der zweite Wärmetauscher (4) ein Ölkühler ist und der dritte Wärmetauscher (3) ein Kondensator ist.

8. Tragkonstruktion für Wärmetauscher nach einem der Ansprüche 1 bis 7, wobei der erste Wärmetauscher (2) einen unteren Abschnitt (22) unter dem Kühlerträger (1) aufweist, wenn der erste Wärmetauscher (2) an dem Kühlerträger (1) befestigt ist.

9. Tragkonstruktion für Wärmetauscher nach einem der Ansprüche 1 bis 8, wobei der obere Abschnitt des zweiten Wärmetauschers (4) von einem angeschweißten, an dem Kühlerträger (1) befestigten angeschweißten Bolzen (18A; 18B; 18C) abgestützt wird.

10. Verfahren zum Tragen von Wärmetauschern, umfassend die folgenden Schritte:
- Abstützen eines ersten Wärmetauschers (2) durch einen Kühlerträger (1) und
- Abstützen eines oberen Abschnitts eines zweiten Wärmetauschers (4) durch den Kühlerträger an einer Vorderseite des ersten Wärmetauschers (2),
**dadurch gekennzeichnet, daß** das Verfahren außerdem den folgenden Schritt umfaßt:
- Abstützen eines unteren Abschnitts des zweiten Wärmetauschers (4) durch einen unteren Abstützstift (26A; 26B), der von einem unteren Abschnitt (22) des ersten Wärmetauschers (2) nach unten vorsteht, so daß der untere Abstützstift (26A; 26B) eine horizontale Bewegung des zweiten Wärmetauschers (4) beschränkt und eine vertikale Bewegung des zweiten Wärmetauschers (4) zuläßt.

## Revendications

1. Structure de support d'échangeur de chaleur comportant :
un premier échangeur de chaleur (2);
un deuxième échangeur de chaleur (4); et
un support principal de radiateur (1) destiné à supporter le premier échangeur de chaleur (2), dans laquelle
le premier échangeur de chaleur (2) a un axe de support inférieur (26A; 26B) qui dépasse vers le bas depuis une partie inférieure (22) du premier échangeur de chaleur (2), et
le deuxième échangeur de chaleur (4) est disposé à l'avant du premier échangeur de chaleur (2) et a une partie supérieure et une partie inférieure, la partie supérieure étant supportée par le support principal de radiateur (1), **caractérisée en ce que** la partie inférieure du deuxième échangeur de chaleur (4) est supportée par l'axe de support inférieur (26A; 26B) du premier échangeur de chaleur (2) de telle sorte que l'axe de support inférieur (26A; 26B) limite un mouvement horizontal du deuxième échangeur de chaleur (4) et permet un mouvement vertical du deuxième échangeur de chaleur (4).

2. Structure de support d'échangeur de chaleur selon la revendication 1, dans laquelle l'axe de support inférieur (26A; 26B) est fabriqué en résine.

3. Structure de support d'échangeur de chaleur selon la revendication 1 ou la revendication 2, dans laquelle l'axe de support inférieur (26A; 26B) et un réservoir inférieur (22) du premier échangeur de chaleur (2) sont formés intégralement en résine.

4. Structure de support d'échangeur de chaleur selon l'une quelconque des revendications 1 à 3, dans laquelle l'axe de support inférieur (26A; 26B) est relié à un support (42A, 42B, 42C) du deuxième échangeur de chaleur (4) de telle sorte que le deuxième échangeur de chaleur (4) est supporté par le premier échangeur de chaleur (2).

5. Structure de support d'échangeur de chaleur selon l'une quelconque des revendications 1 à 4, dans laquelle le premier échangeur de chaleur (2) est un radiateur et le deuxième échangeur de chaleur (4) est un refroidisseur d'huile.

6. Structure de support d'échangeur de chaleur selon l'une quelconque des revendications 1 à 5, comportant en outre un troisième échangeur de chaleur (3), dans laquelle le troisième échangeur de chaleur (3) est disposé à l'avant du premier échangeur de chaleur (2) et supporté par le premier échangeur de chaleur (2).

7. Structure de support d'échangeur de chaleur selon la revendication 6, dans laquelle le premier échangeur de chaleur (2) est un radiateur, le deuxième échangeur de chaleur (4) est un refroidisseur d'huile, et le troisième échangeur de chaleur (3) est un condenseur.

8. Structure de support d'échangeur de chaleur selon l'une quelconque des revendications 1 à 7, dans laquelle le premier échangeur de chaleur (2) a une partie inférieure (22) sous le support principal de radiateur (1) lorsque le premier échangeur de chaleur (2) est fixé sur le support principal de radiateur (1).

9. Structure de support d'échangeur de chaleur selon l'une quelconque des revendications 1 à 8, dans laquelle la partie supérieure du deuxième échangeur de chaleur (4) est supportée par un boulon soudé (18A; 18B; 18C) fixé sur le support principal de radiateur (1).

10. Procédé de support d'un échangeur de chaleur comportant les étapes suivantes consistant à :
- supporter un premier échangeur de chaleur (2) grâce à un support principal de radiateur (1); et
- supporter une partie supérieure d'un deuxième échangeur de chaleur (4) grâce au support principal de radiateur (1) au niveau du côté avant du premier échangeur de chaleur (2),
**caractérisé en ce que** le procédé comprend en outre l'étape consistant à :
- supporter une partie inférieure du deuxième échangeur de chaleur (4) grâce à un axe de support inférieur (26A; 26B) qui dépasse vers le bas depuis une partie inférieure (22) du premier échangeur de chaleur (2) de telle sorte que l'axe de support inférieur (26A; 26B) limite un mouvement horizontal du deuxième échangeur de chaleur (4) et permet un mouvement vertical du deuxième échangeur de chaleur (4).
